# EUROPEAN PATENT SPECIFICATION

(11) **EP 2 065 264 B1**
(45) Date of publication and mention of the grant of the patent: **20.10.2010**
(21) Application number: 08020450.6
(22) Date of filing: 25.11.2008
(51) Int. Cl.: B60R 21/20

(54) **Occupant protection apparatus**
Insassenschutzvorrichtung
Appareil de protection d'occupant

(30) Priority: 29.11.2007 JP 2007309299; 23.10.2008 JP 2008273007
(43) Date of publication of application: 03.06.2009
(73) Proprietor: Toyoda Gosei Co., Ltd., Oaza-Ochiai Haruhi-cho, Nishikasugai-gun Aichi-ken 452-8564 (JP)
(72) Inventor: Kawabe, Hitoshi, Nishikasugai-gun Aichi-ken 452-8564 (JP); Masuda, Yasushi, Nishikasugai-gun Aichi-ken 452-8564 (JP)
(74) Representative: Kramer - Barske - Schmidtchen

(56) References cited:
- EP-A- 2 022 685
- WO-A1-96/08393
- JP-A- 2007 126 117
- JP-A- 2007 168 599
- JP-A- 2007 238 016

## Description

### BACKGROUND OF THE INVENTION

The present invention relates to an occupant protection apparatus applied to a vehicle seat. Specifically, the present invention relates to an occupant protection apparatus that inflates an airbag installed in a seat portion of a seat with inflation fluid such as inflation gas to raise the seat face, thereby inhibiting the lumbar region of an occupant restrained by a seat belt apparatus from moving forward.

When an impact due to a frontal collision is applied to a vehicle, the "submarine phenomenon" can occur even if an occupant is restrained by a seat belt apparatus. Specifically, in the submarine phenomenon, the lumbar region of an occupant restrained to a vehicle seat is disengaged from the lap belt of the seat belt apparatus and moves forward in a sinking manner. Various measures against the submarine phenomenon have been proposed.

For example, Japanese Laid-Open Patent Publication No. 2007-168599 discloses an occupant protection apparatus that includes an airbag installed in the seat portion of a vehicle seat and an inflator (inflation fluid generator) that is installed in a front portion of the airbag. When an impact is applied to the vehicle from front, inflation gas (inflation fluid) is ejected from the inflator to inflate the airbag, so that the seat surface is raised. The raised seat surface pushes the upper thighs of the occupant upward against the lap belt of the seat belt apparatus. This increases the restraining force of the lap belt, thereby restricting the forward movement of the occupant lumbar region.

The interior space of the airbag is divided into several inflation portions arranged along the front-rear direction of the vehicle by means of seams. Among the inflation portions, the inflator is located in the foremost inflation portion. Further, each pair of adjacent inflation portions communicate with each other, so that inflation gas ejected from the inflator is supplied to all the inflation portions through the communication portions. According to this occupant protection apparatus, the seams inhibits inflation gas from moving among the inflation portions even if the occupant pushes the inflated airbag forward. The shape of the airbag is thus prevented from being greatly changed. As a result, the forward movement of the occupant lumbar region is inhibited.

In the above described occupant protection apparatus, a large volume inflation portion is provided in a rear portion of the airbag. The forward movement of the occupant is restricted only by pushing the upper thighs of the occupant upward by the large volume inflation portion. Thus, the lower thighs of the occupant are raised by a small amount, and the forward movement of the occupant lumbar region might be insufficiently inhibited.

JP 2007 238 016 A discloses another example of an occupant protection apparatus corresponding to the preamble of claim 1.

### SUMMARY OF THE INVENTION

Accordingly, it is an objective of the present invention to provide an occupant protection apparatus that reliably inhibits forward movement of the lumbar region of an occupant.

To achieve the foregoing objective and in accordance with one aspect of the present invention, an occupant protection apparatus having an airbag module arranged in a seat portion of a vehicle seat is provided. The seat portion has a seat surface. The airbag module includes an inflation fluid generator and an airbag. The airbag is inflated by a high pressure fluid ejected from the inflation fluid generator, thereby raising the seat surface to inhibit a forward movement of the lumbar region of an occupant who is seated on the seat portion and restrained by a seat belt. The airbag includes an airbag body that forms an outer shape of the airbag. The airbag body includes a rear inflating portion that is inflated below the upper thighs of the occupant, and a front inflating portion that is inflated below the lower thighs of the occupant. When the airbag is inflated, the front inflating portion is inflated to a higher position than the rear inflating portion. The airbag body includes further an inner bag that is arranged in the front inflating portion, the inner bag accommodating the inflation fluid generator having at least one discharge hole that discharges the inflation fluid from the inflation fluid generator substantially upward, and/or a tether that is located in the airbag body and being arranged at a position corresponding to the rear inflating portion. The tether restricts the inflation of the airbag body with respect to the direction of the height, such that the rear inflating portion is inflated to a lower position than the front inflating portion when the airbag body is inflated.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a cross-sectional side view illustrating a vehicle seat to which an occupant protection apparatus according to one embodiment of the present invention is applied;
Fig. 2 is an enlarged partial cross-sectional side view illustrating the section indicated by chain line X in Fig. 1;
Fig. 3 is a perspective view illustrating the vehicle seat and the seat belt apparatus shown in Fig. 1:
Fig. 4 is an enlarged partial cross-sectional side view of Fig. 2, showing a state in which the opening of the inner bag and the opening of the airbag body are both closed with bolts of a retainer;
Fig. 5 is a plan view illustrating the airbag module of the occupant protection apparatus according to the embodiment of the present invention;
Fig. 6 is a bottom view illustrating the airbag module shown in Fig. 5;
Fig. 7 is a bottom view illustrating the components (the airbag body, the inner bag, and the inflator assembly) of the airbag module shown in Fig. 5;
Fig. 8 is a diagram showing a side of the inflator assembly and fabric sheets used for the airbag body and the inner bag in a spread state;
Fig. 9 is a cross-sectional side view of the occupant protection apparatus of Fig. 2, showing a state in which the inner bag and the airbag body are inflated and the seat surface of the seat portion is raised;
Fig. 10 is a cross-sectional side view showing only the inner bag and the airbag body of Fig. 9;
Fig. 11(A) is a cross-sectional side view illustrating a front inflating portion and a rear inflating portion in an airbag body according to another embodiment; and
Fig. 11(B) is a cross-sectional side view illustrating a front inflating portion and a rear inflating portion in an airbag body according to yet another embodiment.

### DETAILED DESCRIPTION OF THE PREFERRED EMBODIMENTS

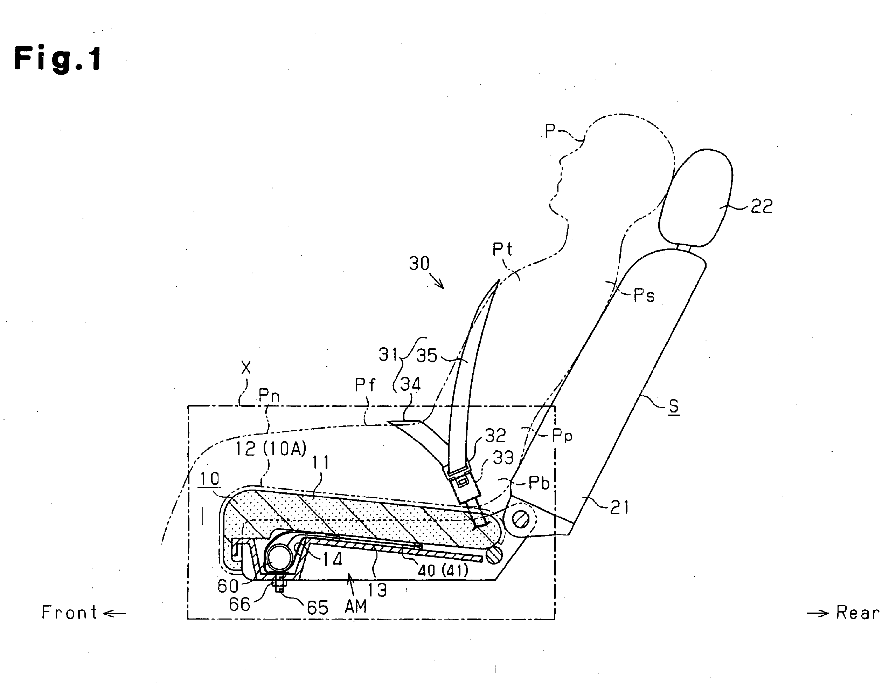

An occupant protection apparatus according to one embodiment of the present invention will now be described with reference to Figs. 1 to 10. In the following, the traveling direction of the vehicle is defined as a forward direction. The backward, upward, downward, leftward, and rightward directions are defined with reference to the forward direction. In each of the drawings, "inside" and "outside" refer to the inside and the outside of the vehicle, respectively.

First, a vehicle seat to which an occupant protection apparatus of the present embodiment is applied will be schematically described.

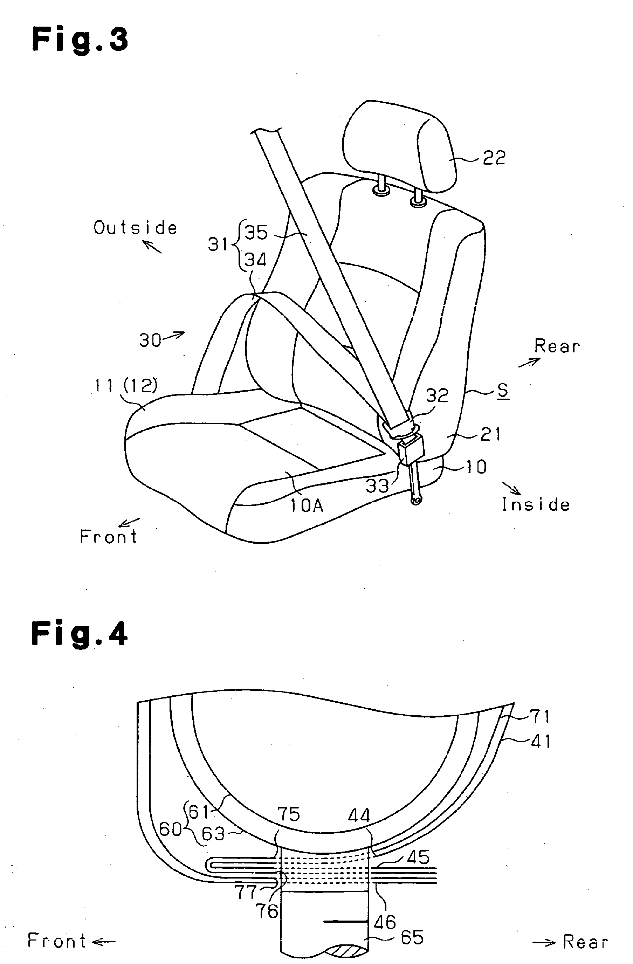

As shown in Figs. 1 and 3, a vehicle seat S has a seat portion 10, a backrest 21 that is tiltably arranged at the rear end of the seat portion 10, and a headrest 22 arranged on top of the backrest 21.

As shown in Fig. 1, the seat portion 10 is used to seat an occupant P that is an object to be restrained by the occupant protection apparatus. The seat portion 10 includes a seat cushion 11 and a seat pan 13 that supports the seat cushion 11 from below. The seat cushion 11 is covered with a cover 12, which is made of fabric or leather. An accommodation recess 14 is formed in a front portion of the seat pan 13 to accommodate a part of an airbag module AM, which will be discussed below. The accommodation recess 14 is shaped like a channel that has an opening extending in the widthwise direction.

As shown in Fig. 3, the vehicle is equipped with a seat belt apparatus 30 for restraining the occupant P seated on the vehicle seat S. The seat belt apparatus 30 includes belt-like webbing 31 for restraining the occupant P, a tongue 32 attached to the webbing 31 to be slidable along the webbing 31, and a buckle 33 provided on a side (right side as viewed in Fig. 3) of the seat portion 10. The tongue 32 is detachably engaged with the buckle 33. One end of the webbing 31 is fixed to the other side (left side as viewed in Fig. 3) of the seat portion 10. The other end of the webbing 31 can be reeled in by a seat belt retractor (not shown). The webbing 31 is divided into a lap belt 34 and a shoulder belt 35 at the tongue 32. In the seat belt apparatus 30, the tongue 32 is slid relative to the webbing 31, so as to change the lengths of the lap belt 34 and the shoulder belt 35.

The lap belt 34 refers to a section of the webbing 31 that extends from the tongue 32 to the fixed end of the webbing 31. A shown in Fig. 1, the lap belt 34 extends horizontally from one side of the lumbar region Pp of the seated occupant P to the other side via a front side of the lumbar region Pp, and mainly restrains the lumbar region Pp. The shoulder belt 35 refers to a section of the webbing 31 that extends from the tongue 32 to the seat belt retractor. The shoulder belt 35 extends diagonally from a shoulder Ps of the seated occupant P to the other side of the lumbar region Pp via the front side of a thorax Pt, and mainly restrains the shoulder Ps.

The vehicle is equipped with an occupant protection apparatus that inhibits the submarine phenomenon. The submarine phenomenon refers to a phenomenon in which, when an impact due to a frontal collision is applied to a vehicle from front, the lumbar region Pp of the occupant P restrained to the vehicle seat S by the seat belt apparatus 30 may be disengaged from the lap belt 34 and move forward in a sinking manner.

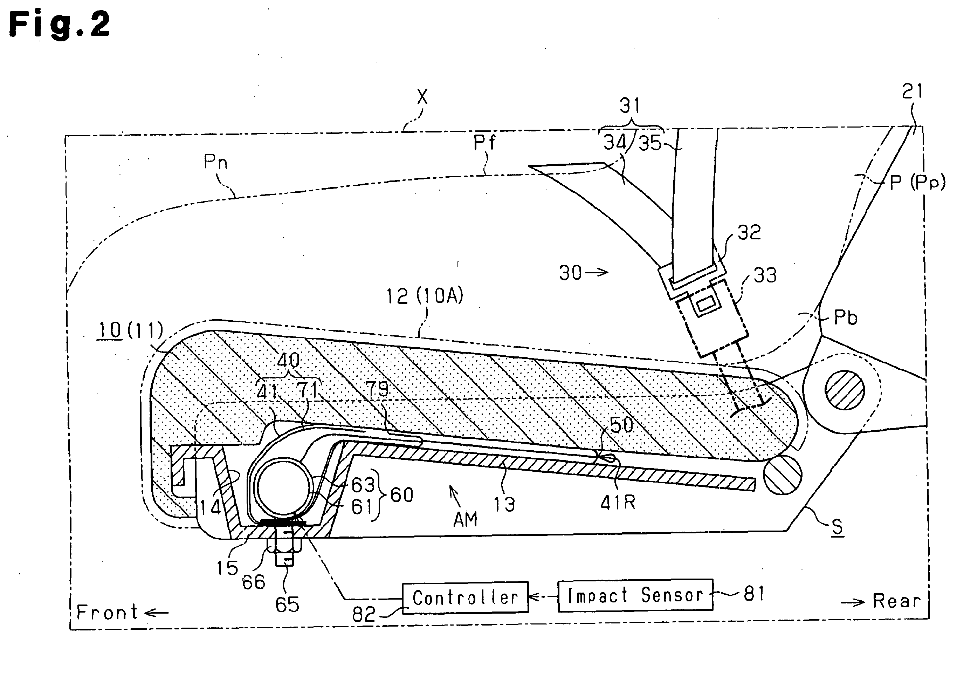

As shown in Fig. 2, the occupant protection apparatus includes the airbag module AM, an impact sensor 81, and a controller 82.

The airbag module AM includes an airbag 40 and an inflator assembly 60. The structure of the airbag 40 and the inflator assembly 60 will now be described.

### <Structure of Airbag 40>

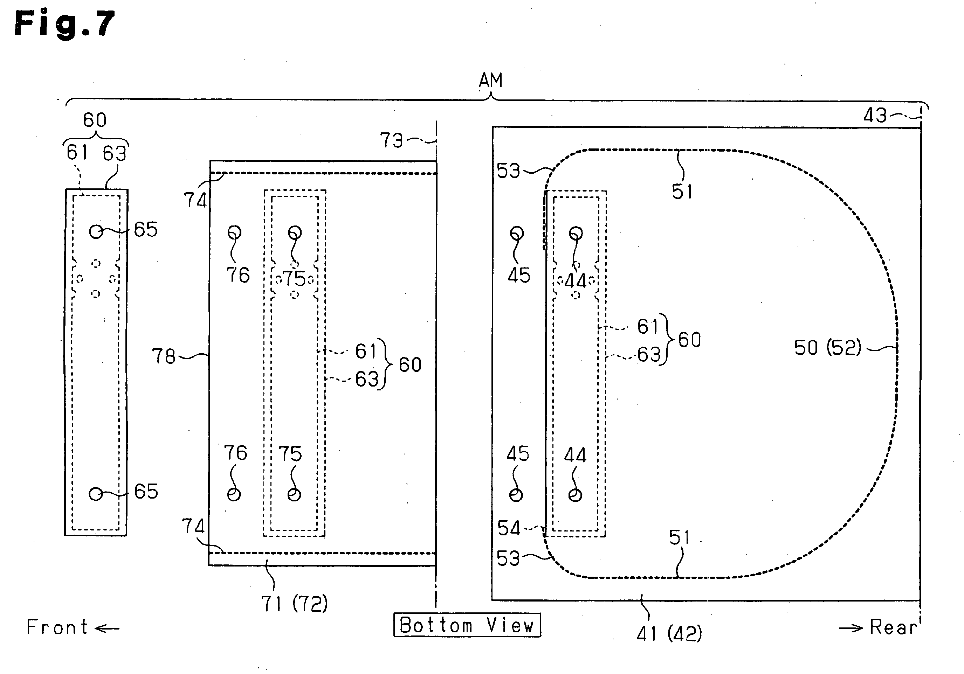

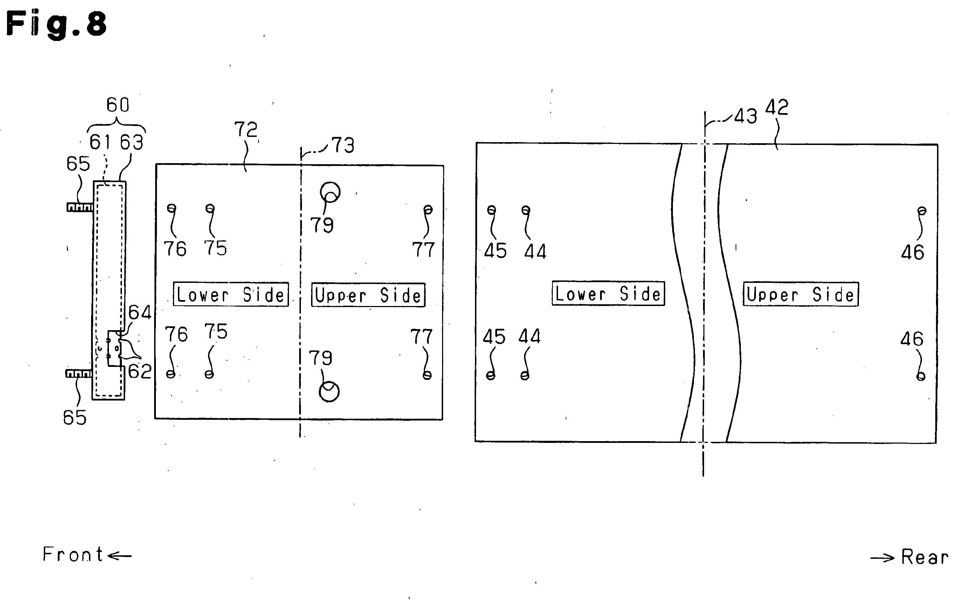

The airbag 40 includes an airbag body 41, which forms the outer shape of the airbag 40. When inflated, the airbag body 41 raises a seat surface 10A of the seat portion 10. The airbag body 41 is formed by a rectangular sheet 42 of fabric, which extends in the front-rear direction of the vehicle as shown in Fig 8. As shown in Fig. 7, the fabric sheet 42 is folded back upon itself at a folding line 43 defined in a center portion. Then, the folded portions of the fabric sheet 42 are joined to each other along a joint line 50, which is represented by a thick broken line in Fig. 7, so that the airbag body 41 is formed.

The fabric sheet 42 is formed of woven fabric, which is obtained by weaving warps and wefts made of polyester threads or polyamide threads. The fabric sheet 42 thus has a high stiffness and flexibility. As shown in Fig. 8, a plurality of (two in this embodiment) of bolt insertion holes 44 are formed in a front end portion of the spread fabric sheet 42. The bolt insertion holes 44 are separated from each other along the widthwise direction. The insertion holes 44 are used for receiving bolts 65 of a retainer 63, which will be discussed below. Also, engaging holes 45 is formed in the front section of the spread fabric sheet 42 at positions forward of the bolt the insertion holes 44. The engaging holes 45 are used for allowing the fabric sheet 42 to engage with the bolts 65. Further, a pair of engaging holes 46 are formed in a rear end of the fabric sheet 42. The positions of the engaging holes 46 are determined so as to correspond to the engaging holes 45 when the fabric sheet 42 is folded back.

As shown in Fig. 7, the joint line 50 includes a pair of first joint portions 51, which are separated in the widthwise direction and extend along the side edges, a second joint portion 52, which extends along the widthwise direction to connect the rear ends of the first joint portions 51 to each other, and a pair of third joint portions 53, each of which extends from the front end of one of the first joint portions 51 toward the other first joint portion 51. In the airbag body 41, which is formed by joint at the joint line 50, a portion encompassed by the joint line 50 is a portion that is inflated by inflation gas G. The front ends of the airbag body 41 are not joined, so that an opening 54 is formed between the third joint portions 53. The opening 54 is required to insert the inflator assembly 60 into the airbag body 41 and to draw the harness (not shown) of the inserted inflator assembly 60 to the outside.

Joining means along the joint line 50 includes, for example, sewing with sewing thread, adhesion with adhesive, and welding. In this embodiment, the fabric sheet 42 is sewn with sewing thread. In this embodiment, a single fabric sheet is used as the fabric sheet 42, and the airbag body 41 is formed by folding back the single fabric sheet. Therefore, the joint (sewing) along the second joint portion 52 in the vicinity of the folding line 43 may be omitted.

From the standpoint of the manner in which it is inflated, the airbag body 41 is structured to include a rear inflating portion 48, which is inflated below the upper thighs Pf of the occupant P, and a front inflating portion 47, which is inflated below the lower thighs Pn of the occupant up to a position above the rear inflating portion 48. In this description, the thighs are the top parts of legs, between the knees and the hips. A part of the thigh closer to the knee is referred to as the lower thigh Pn, and a part closer to the hip is referred to as the upper thigh Pf.

### <Structure of Inflator Assembly 60>

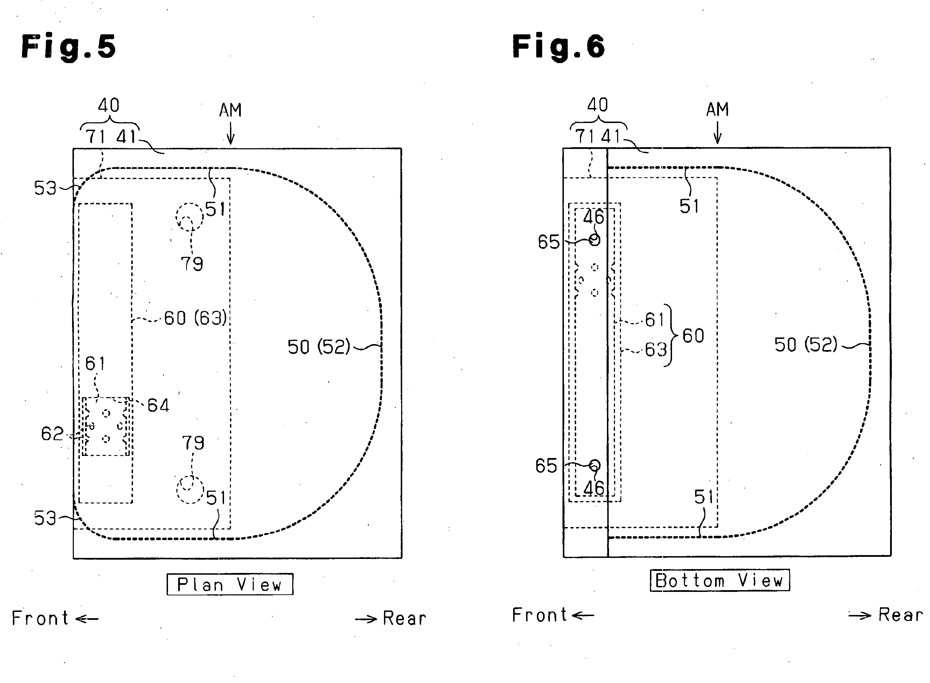

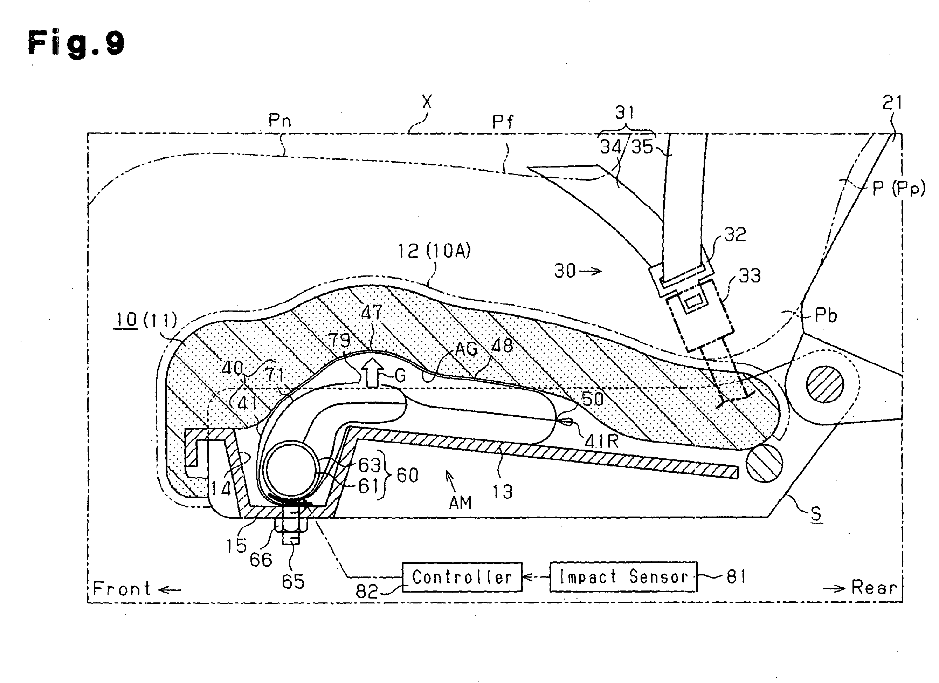

As shown in Fig. 9 the inflator assembly 60 is used for supplying inflation gas G, which serves as inflation fluid, to the above described airbag body 41. The inflator assembly 60 includes an inflator 61, which serves as an inflation fluid generator, and a retainer 63, which is attached to the outside of the inflator 61. The inflator 61 is substantially cylindrical, and the inside of the inflator 61 is filled with high pressure inflation gas G. As shown in Figs. 5 and 6, a number of gas outlets 62 are formed in a predetermined area in the longitudinal direction of the inflator 61. The gas outlets 62 are spaced from one another in the circumferential direction and the longitudinal direction. One end of the inflator 61 is connected to a harness (not shown), which is wiring for sending control signals to the inflator 61. The inflator 61 is a stored gas type. When receiving a control signal through the harness, the inflator 61 detonates explosive so that high pressure inflation gas G is expanded through heating. The inflation gas G breaks a partition wall in the inflator 61 and ejects out through the gas outlet 62.

Instead of the stored gas type inflator, other types of inflators may be used. For example, a pyrotechnic type in which gas generating agent stored in the inflator is burned to generate inflation gas G and the gas G is ejected through gas outlet may be used. Alternatively, a hybrid type in which the pyrotechnic type and stored gas type are combined may be used.

The retainer 63 is formed by bending a plate material such as a metal plate and is shaped as a thin cylinder extending in the widthwise direction. The retainer 63 has a window 64 through which the gas outlets 62 are exposed. A plurality of (two, in this embodiment) bolts 65 are embedded in the lower surface of the retainer 63. The bolts 65 are spaced apart in the widthwise direction (see Fig. 8).

The inflator 61 may be integrally formed with the retainer 63.

### <Installing Structure of Inflator Assembly 60>

First, as shown in Fig. 7, the inflator assembly 60 is inserted into the airbag body 41 through the opening 54 of the airbag body 41. Then, the inflator assembly 60 is arranged in a front portion of the airbag body 41 (a portion that is used as the front inflating portion 47 at the time of inflation). As shown in Figs. 2 and 4, the bolts 65 of the retainer 63 are inserted to the bolt insertion holes 44 of the airbag body 41 from above. Further, the front end of the airbag body 41 is wrapped about the outer circumferential surface of the inflator assembly 60 toward the lower bolt 65, so that the engaging holes 45, 46 of the airbag body 41 are located below the inflator assembly 60. Subsequently, the bolts 65 of the retainer 63 are inserted into the engaging holes 45, 46, so that the wrapped portion of the airbag body 41 is engaged with the bolts 65. The engagement closes the opening 54 of the airbag body 41.

As shown in Fig. 2, the bolts 65 are passed through a bottom 15 of the accommodation recess 14. Nuts 66 are threaded to the bolts 65 so that the inflator assembly 60 is fastened to the accommodation recess 14, together with the airbag body 41. The fastening presses the front end of the airbag body 41 against the bottom 15 of the accommodation recess 14, which substantially closes the opening 54.

### <Arrangement of Airbag body 41 >

As shown in Fig. 2, the airbag body 41 except for the portion accommodated in the accommodation recess 14 is located between the seat cushion 11 and the seat pan 13, when spread flat without being filled with inflation gas G. A rear end 41 R of the flatly spread airbag body 41 is located substantially below the boundary between the upper thighs Pf and the buttocks Pb of the occupant P seated on the seat portion 10.

In this embodiment, an inner bag 71 is employed in addition to the basic structure of the airbag module AM, which has been described. Hereinafter, the structure of the inner bag 71 will be discussed.

### <Structure of Inner Bag 71 >

In addition to the airbag body 41, which has been described so far, the airbag 40 includes the inner bag 71, which is accommodated in the airbag body 41.

The inner bag 71 accommodates the inflator assembly 60. The inner bag 71 is formed by a rectangular sheet 72 of fabric as shown in Fig 8. The fabric sheet 72 is folded back onto itself at a folding line 73 defined in a center portion. As shown in Fig. 7, the folded back fabric sheet 72 is formed along a pair of joint lines 74, which are represented by thick broken lines, at both sides of the fabric sheet 72. The fabric sheet 72 is formed of the same woven fabric as that of the airbag body 41, and thus has a high stiffness and flexibility. Like the fabric sheet 42 of the airbag body 41, the fabric sheet 72 has a pair of bolt insertion holes 75, a pair of engaging holes 76, and a pair of engaging holes 77, which are formed in a front end portion and a rear end portion (see Fig. 8).

As shown in Fig. 7, the joint lines 74 extend along the side edges and are spaced apart in the widthwise direction. The distance between the joint lines 74 is smaller than the distance between the joint portions 51. In the inner bag 71, which is formed by joint at the joint lines 74, a portion encompassed by the joint lines 74 is a portion that is inflated by inflation gas G.

Joining means along the joint lines 74 includes, for example, sewing with sewing thread, adhesion with adhesive, and welding, as in the case of the joint line 50 described above. In this embodiment, the sides of the fabric sheet 72 are sewn together with sewing threads. In this embodiment, a single fabric sheet is used as the fabric sheet 72, and the single fabric sheet is folded back. In addition to the joint lines 74, a joint line may be provided along and in the vicinity of the folding line 73, so that the fabric sheet 72 is joined along the additional joint line.

The front end of the inner bag 71 is not sewn, and an opening 78 is formed between the front ends of the joint lines 74. The opening 78 is required to insert the inflator assembly 60 into the inner bag 71 and to draw the harness (not shown) of the inserted inflator assembly 60 to the outside.

### <Installing Structure of Inner Bag 71>

The inner bag 71 is arranged in a front end portion of the airbag body 41 (a portion that becomes the front inflating portion 47 during inflation) with the bolt insertion holes 75 and the engaging holes 76, 77 of the inner bag 71 aligned with the bolt insertion holes 44 and the engaging holes 45, 46 of the airbag body 41, respectively. Then, the inner bag 71 is joined (sewn) together with the airbag body 41 at the third joint portions 53 of the airbag body 41.

The inflator assembly 60 is inserted into the inner bag 71 through the opening 78. As shown in Figs. 2 and 4, the bolts 65 of the retainer 63 are inserted to the bolt insertion holes 44 of the airbag body 41 and the bolt insertion holes 75 of the inner bag 71 from above. The front end of the inner bag 71, together with the front end of the airbag body 41, is wrapped around the outer circumferential surface of the inflator assembly 60 toward the lower bolt 65. Due to the winding, the engaging holes 76, 77 of the inner bag 71 are located below the inflator assembly 60 together with the engaging holes 45, 46 of the airbag body 41. The bolts 65 are inserted into the engaging holes 76, 77, so that the wrapped portion of the inner bag 71 is engaged with the bolts 65 together with the wrapped portion of the airbag body 41. The engagement closes the opening 78 of the inner bag 71 (see Fig. 7).

The nuts 66 are threaded to the bolts 65 passed through the bottom 15 of the accommodation recess 14, so that the inner bag 71 is fastened to the accommodation recess 14, together with the inflator assembly 60 and the airbag body 41. The fastening presses the front end of the inner bag 71 against the bottom 15 of the accommodation recess 14, which substantially closes the opening 78 (see Fig 7).

### <Discharge Holes 79 of Inner Bag 71>

As shown in Figs. 2 and 8, a pair of discharge holes 79 are formed in the vicinity of side edges in the widthwise direction of the inner bag 71. The discharge holes 79 allows the interior of the inner bag 71 to communicate with the outside, and discharges the inflation gas G ejected from the gas outlets 62 of the inflator 61 upward. In an unfolded state of the fabric sheet 72 (see Fig. 8), the discharge holes 79 are located between the folding line 73 and the engaging holes 77. In a folded state of the fabric sheet 72, the discharge holes 79 are located in the upper side of the fabric sheet 72.

As described above, the occupant protection apparatus includes the impact sensor 81 and the controller 82 shown in Fig. 2, in addition to the airbag 40. The impact sensor 81 is an acceleration sensor and provided, for example, in the front bumper (not shown) of the vehicle to detect an impact applied to the front bumper from front. The controller 82 controls the operation of the inflator 61 based on a detection signal from the impact sensor 81.

The operation of the above occupant protection apparatus will now be described.

When a head-on collision of the vehicle occurs, the impact generated in the front bumper is detected by the impact sensor 81. If the impact sensor 81 detects an impact of an magnitude greater than a predetermined value, the controller 82 sends a control signal to the inflator 61 through the harness based on the detection signal. In response to the control signal, the inflator 61 detonates the explosive so that high pressure inflation gas is expanded through heating. The high pressure inflation gas G breaks the partition wall in the inflator 61 and ejects out through the gas outlet 62. While inflating the inner bag 71, the inflation gas G is discharged through the discharge holes 79 of the inner bag 71 and inflates the airbag body 41. Thus, the manners in which the inner bag 71 and the airbag body 41 are inflated vary depending on the relationship between the amount of the inflation gas G ejected from the inflator 61 (hereafter, referred to as "ejection amount Q1"), and the amount of the inflation gas G discharged through the discharge holes 79 (hereafter, referred to as "discharged amount Q2").

Generally, the ejection amount Q1 increases as time passes after the start of ejection. After reaching the maximum, the ejection amount Q1 starts decreasing and is reduced as time passes. The inflation gas G is ejected from the inflator 61 in this ejection characteristics. Taking the ejection characteristics into consideration, the ejection amount Q1 and the discharged amount Q2 are appropriately set in the preset embodiment, such that the front inflating portion 47 is inflated to reach a higher position than the rear inflating portion 48.

The period during which the inflation gas G is ejected by the inflator 61 is divided into the following three stages.
Stage I: a period in which the ejection amount Q1 is less than the discharged amount Q2 after the start of the ejection of the inflation gas G
Stage II: a period subsequent to the stage I, in which the ejection amount Q1 reaches and surpasses the discharged amount Q2
Stage III: a period subsequent to the stage Il, in which the ejection amount Q1 again falls below the discharged amount Q2

In each of the stages I to III, the occupant protection apparatus is expected to operate in the following manner.

### <Stage I>

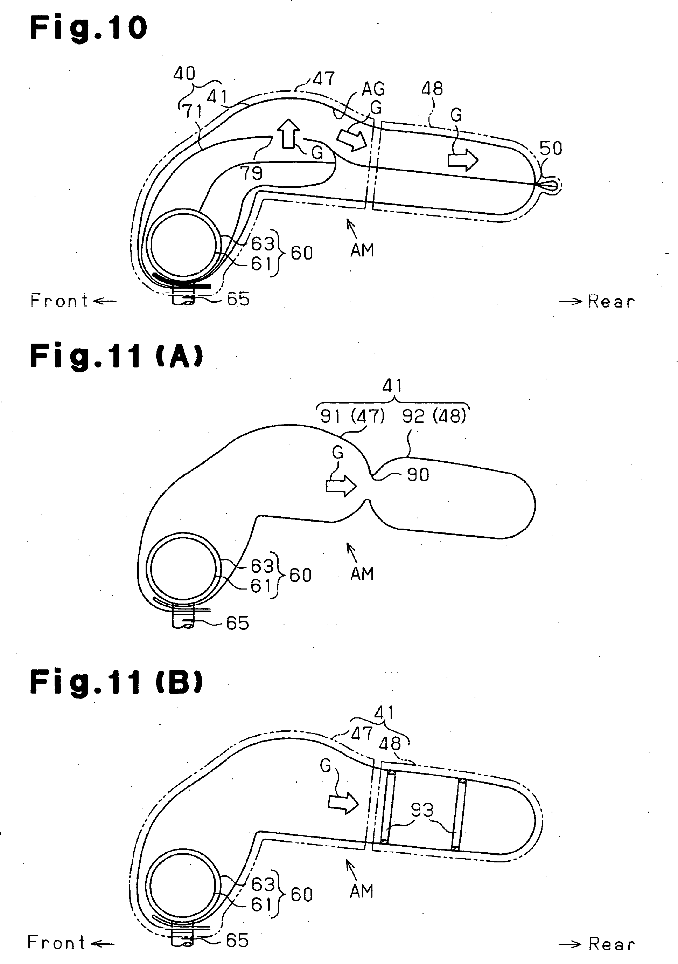

When the high pressure inflation gas G starts being ejected from the inflator 61, inflation gas G is first supplied to the inner bag 71, which accommodates the inflator 61, as shown in Figs. 9 and 10. The inflation gas G starts inflating the inner bag 71. This indirectly inflates the airbag body 41 outside the inner bag 71, particularly the front inflating portion 47, in which the inflator 61 and the inner bag 71 are located. During this inflation, since the airbag body 41 is located between the seat cushion 11 and the seat pan 13 made of a steel plate, the airbag body 41 is mostly inflated upward, without being inflated downward.

In the stage I, since the ejection amount Q1 of the inflation gas G is less than the discharged amount Q2 (Q1 < Q2), a great part of the inflation gas G from the inflator 61 starts being discharged through the discharge holes 79 before the inner bag 71 is completely inflated. At this time, since the inflator 61 and the inner bag 71 are located in the vicinity of the front inflating portion 47, and the discharge holes 79 are located on the upper side of the folded fabric sheet 72, the inflation gas G is discharged upward through the discharge holes 79 inside the front inflating portion 47. The inflation gas G inflates the front inflating portion 47, so that its pressure gradually increases. This causes the seat surface 10A starts rising in a position below the lower thighs Pn of the occupant P. Accordingly, the lower thighs Pn of the occupant P are pushed up. The inflation of the front inflating portion 47 creates a gap AG between the outer surface of the inner bag 71 and the inner surface of the front inflating portion 47.

After inflating the front inflating portion 47 to a certain extent to raise the seat surface 10A, the inflation gas G starts flowing rearward through the gap AG. The inflation gas G then inflates the rear inflating portion 48, and the inner pressure is gradually equalized.

As the front inflating portion 47 and the rear inflating portion 48 are inflated, the seat surface 10A is raised successively from the front to the rear. This pushes up a part of the body of the occupant P seated on the seat portion 10 from the lower thighs Pn to the rear end of the upper thighs Pf (portion in front of the buttocks Pb), successively from the front to the rear. Accordingly, the region from the lower thighs Pn to the rear end of the upper thighs Pf (portion in front of the buttocks Pb) is successively pushed up, so that the lumbar region Pp of the occupant P is pressed against the lap belt 34 of the seat belt apparatus 30. As a result, the restraining force of the lap belt 34 is increased, and the lumbar region Pp of the occupant P is prevented from moving forward.

Further, since the front inflating portion 47 is inflated to a position higher than the rear inflating portion 48, the front section of the seat surface 10A is raised higher than the remainder of the seat surface 10A. Accordingly, the lower thighs Pn of the occupant P are raised higher than the upper thighs Pf, and forward movement of the lumbar region Pp is further reliably restricted.

### <Stage II>

In the stage II, since the ejection amount Q1 of the inflation gas G surpasses the discharged amount Q2 (Q1 ≥ Q2), the inflation gas G spurts upward through the discharge holes 79. Although the internal pressure of the airbag body 41 has been equalized to some extent in the stage I, an upper portion of the front inflating portion 47 in the airbag body 41 is inflated in a concentrated manner, and the internal pressure of the front inflating portion 47 is locally increased. As a result, the seat surface 10A is further raised in a portion below the lower thighs Pn of the occupant P, so that the occupant's lower thighs Pn are raised higher. This reliably restricts the forward movement of the lumbar region Pp of the occupant P.

### <Stage III>

In the stage III, since the ejection amount Q1 of the inflation gas G falls below the discharged amount Q2 (Q1 < Q2), the discharge of the inflation gas G through the discharge holes 79 loses the momentum. Accordingly, the internal pressure of the airbag body 41 approaches the equalized state.

It is considered that the three stages I to III allow the front inflating portion 47 to be raised higher than the rear inflating portion 48.

If the airbag body 41 is installed in the seat portion 10 in a folded state prior to inflation, the folded portion becomes resistance to the inflation. Therefore, the energy of the inflation energy G is consumed to unfold that portion. In this regard, the airbag body 41 of the present embodiment is not folded, but disposed in an already flatly spread state. Thus, compared to the case where the airbag body 41 is folded, the resistance to the inflation of the airbag body 41 is small. Thus, the airbag body 41 (the front inflating portion 47 and the rear inflating portion 48) are quickly inflated.

A load generated by the weight of the occupant P acts on the airbag body 41, which is inflated in the above described manner. The load is received in a large area from the lower thighs Pn to the upper thighs Pf of the occupant P. Thus, the impact caused by the inflation of the airbag body 41 acts to the occupant P in a dispersed manner, and is not concentrated in a specific section.

The present embodiment described above has the following advantages.

(1) The airbag body 41, which forms the outer shape of the airbag 40, includes the rear inflating portion 48, which is inflated below the upper thighs Pf of the occupant, and the front inflating portion 47, which is inflated below the knees Pn of the occupant P. Thus, when the seat surface 10A of the seat portion 10 is raised by inflation of the airbag body 41, the lower thighs Pn and the upper thighs Pf of the occupant P are lifted. The lumbar region Pp of the occupant P is therefore pressed against the lap belt 34 of the seat belt apparatus 30, and the restraining force of the lap belt 34 is increased. As a result, the forward movement of the occupant lumbar region Pp is restricted.

Further, at the inflation of the airbag body 41, the front inflating portion 47 is inflated to be higher than the rear inflating portion 48. A section of the seat surface 10A that corresponds to the front inflating portion 47 is raised higher than a section that corresponds to the rear inflating portion 48. Accordingly, the lower thighs Pn of the occupant P are raised higher than the upper thighs Pf, and forward movement of the lumbar region Pp is restricted.

As a result, compared to a configuration in which the upper thighs Pf of the occupant is simply raised by inflation of the airbag 40 (a conventional occupant protection apparatus), forward movement of the lumbar region Pp of the occupant, that is, the submarine phenomenon is more reliably inhibited.

(2) The inner bag 71 is used as a par of the airbag 40. The inner bag 71, which accommodates the inflator 61, is located in the front inflating portion 47 of the airbag body 41. The inner bag 71 has the discharge holes 79, through which the inflation gas G from the inflator is discharged substantially upward. Therefore, the discharge of the inflation gas G through the discharge holes 79 inflates the front inflating portion 47 and the rear inflating portion 48, and the front inflating portion 47 is reliably inflated to be higher than the rear inflating portion 48. As a result, the advantage of the above item (1) is ensured.

Since the inflator 61, the airbag body 41, and the inner bag 71 are arranged in the above described manner, the airbag body 41 is inflated successively from the front to the rear. The lower thighs Pn of the seated occupant P are raised earlier than the upper thighs Pf. This is also effective to restrict the forward movement of the lumbar region Pp of the occupant P.

(3) Most of the airbag body 41 except for the front end portion in which the inflator assembly 60 is located is installed in the seat portion 10 while being spread flatly, without being filled with the inflation gas G (see Fig 2). Therefore, compared to the case where the airbag body 41 is installed in a folded state, the front inflating portion 47 and the rear inflating portion 48 of the airbag body 41 are inflated in an earlier stage.

(4) The airbag body 41 is formed by a single bag member, and a front section of the bag member is used as the front inflating portion 47, and a rear section is used as the rear inflating portion 48. Further, the inner bag 71, which accommodates the inflator 61, is located in the front inflating portion 47. Therefore, by blowing high pressure inflation gas G from the inflator 61 onto the front inflating portion 47 through the discharge holes 79 of the inner bag 71, the front inflating portion 47 is inflated to be higher than the rear inflating portion 48 at the time of inflation of the airbag body 41. To achieve the same objective, there is no need to employ an airbag body having a plurality of bag members or an airbag body having tethers in it.

The present invention may be embodied in the following forms.
(a) The front inflating portion 47 and the rear inflating portion 48 of the airbag body 41 may have shapes different from those described in the above embodiment. Figs. 11 (A) and 11 (B) show examples:

As shown in Fig. 11 (A), an airbag body 41 may be formed by two bag members 91, 92, which are connected to each other along the front-rear direction so as to communicate with each other. The front bag member 91 functions as the front inflating portion 47, and the rear bag member 92 functions as the rear inflating portion 48. The bag members 91, 92 are formed such that the height of the front bag member 91 when inflated is higher than the height of the rear bag member 92 when inflated.

As described above, the edges of the upper portion and the lower portion of the folded fabric sheet are sewn to form the airbag body 41. In addition, the folded fabric sheet is joined (sewn) at its middle portion to divide the sheet into two, thereby forming the two bag members 91, 92. At this time, a communication portion 90 is not joined.

This configuration allows the front bag member 91 and the bag member 92 to be inflated by the high pressure inflation gas G from the inflator 61. At this time, since the bag members 91, 92 communicate with each other through the communication portion 90, the inflation gas G is supplied to both bag members 91, 92 regardless of which of the bag members 91, 92 accommodates the inflator 61. When both bag members 91, 92 are inflated, the front bag member 91 functions as the front inflating portion 47, and the rear bag member 92 functions as the rear inflating portion 48. As a result, at the inflation of the airbag body 41, the front inflating portion 47 is inflated to be higher than the rear inflating portion 48 without using the inner bag 71.

As shown in Fig. 11(B), a plurality of tethers 93 that limit vertical inflation may be provided in a rear portion of the airbag body 41. This limits the height of the rear inflating portion 48 at the time of inflation to be lower than the height of the front inflating portion 47. The tethers 93 are formed of, for example, fabric to be cylindrical, and arranged along the inner surface of the airbag body 41. The tethers 93 are joined to the airbag body 41 by means of, for example, sewing.

When the inflation gas G from the inflator 61 is supplied to the airbag body 41 and the airbag body 41 is inflated, vertical inflation of a portion in which the tethers 93 are provided is restricted. Due to this restriction, the height of the rear inflating portion 48 when inflated is lower than the height of the front inflating portion 47. As a result, at the inflation of the airbag body 41, the front inflating portion 47 is inflated to be higher than the rear inflating portion 48 without using the inner bag 71.
(b) The discharge holes 79 of the inner bag do not necessarily have to discharge the inflation gas G from the inflator 61 strictly upward. As long as the front inflating portion 47 is inflated upward, the discharge holes 79 may discharge gas in an inclined direction.
(c) The airbag body 41 may be installed in the seat portion 10 (between the seat cushion 11 and the seat pan 13) in a folded state.
(d) The present invention may be applied to a vehicle seat that has no seat pan 13, but has a wireframe forming a part of the seat frame.
(e) The airbag body 41 may be formed by joining a plurality of stacked fabric sheets. The fabric sheets are folded back at a common folding line defined in the center portion, and laminated. The fabric sheets are then joined along joint lines. The greater the number of the used fabric sheets, the greater the strength of the airbag body becomes. The inner bag 71 also may be formed by folding back a plurality of fabric sheets.
(f) The airbag body 41 may be formed by joining a plurality of stacked fabric sheets along joint lines. The difference from the illustrated embodiment is that the fabric sheets are not folded back at the center. The inner bag 71 may also be formed by a plurality of fabric sheets.
(g) The inner bag 71 and the inflator assembly 60 may be located at positions in the airbag body 41 other than the positions described in the above embodiment. For example, the airbag body 41 may be located in a middle portion with respect to the front-rear direction, or at the rear portion.
(h) The bolts 65 of the inflator assembly 60 may be located at positions other than the bottom 15 in the accommodation recess 14. For example, the bolts 65 may be passed through the front wall surface and threaded to the nuts 66.
(i) The number of the discharge holes 79 in the inner bag 71 may be one or greater than or equal to three. Further, the positions of the discharge holes 79 in the widthwise direction of the inner bag 71 may be changed.
(j) The present invention may be applied to any vehicle seats including front seats and rear seats.
(k) Fluid other than the inflation gas G may be used as an inflation fluid.

Therefore, the present examples and embodiments are to be considered as illustrative and not restrictive and the invention is not to be limited to the details given herein, but may be modified within the scope and equivalence of the appended claims.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An occupant protection apparatus having an airbag module (AM) arranged in a seat portion (10) of a vehicle seat, wherein the seat portion (10) has a seat surface (10A), the airbag module (AM) includes an inflation fluid generator (61) and an airbag (40), and the airbag (40) is inflated by a high pressure fluid ejected from the inflation fluid generator (61), thereby raising the seat surface (10A) to inhibit a forward movement of the lumbar region of an occupant who is seated on the seat portion (10) and restrained by a seat belt (30),
the airbag (40) includes an airbag body (41) that forms an outer shape of the airbag (40), the airbag body (41) including:
- a rear inflating portion (48, 92) that is inflated below the upper thighs of the occupant;
and
- a front inflating portion (47, 91) that is inflated below the lower thighs of the occupant, wherein, when the airbag (40) is inflated, the front inflating portion (47, 91) is inflated to a higher position than the rear inflating portion (48, 92);
characteriszed in that
- an inner bag (71) is arranged in the front inflating portion, the inner bag (71) accommodating the inflation fluid generator (61) having at least one discharge hole (79) that discharges the inflation fluid from the inflation fluid generator (61) substantially upward,
or
- a tether (93) is located in the airbag body (41) and being arranged at a position corresponding to the rear inflating portion (48), wherein the tether (93) restricts the inflation of the airbag body (41) with respect to the direction of the height, such that the rear inflating portion (48) is inflated to a lower position than the front inflating portion (47) when the airbag body (41) is inflated.

2. The occupant protection apparatus according to claim 1, **characterized in that** the discharge hole (79) is one of a pair of discharge holes each formed in the vicinity of a side of the inner bag (71) in a widthwise direction, each of the discharge holes (79) has an upward opening that allows the inner bag (71) and the airbag body (41) to communicate with each other.

3. The occupant protection apparatus according to claim 1, **characterized in that** the airbag body (41) is formed of a single bag member (41), wherein the single bag member (41) includes a front section (47, 91) serving as the front inflating portion and a rear section (48, 92) serving as the rear inflating portion.

4. The occupant protection apparatus according to claim 1 or 2, **characterized in that** the airbag body (41) includes a front bag member (91) serving as the front inflating portion and a rear bag member (92) serving as the rear inflating portion, wherein the rear bag member (92) is connected to the rear side of the front bag member (91) and communicates with the front bag member (91).

5. The occupant protection apparatus according to any one of claims 1 to 4, **characterized in that** the inflation fluid generator (61) is located in the front inflating portion (47, 91) of the airbag body (41).

6. The occupant protection apparatus according to any one of claims 1 to 5, **characterized in that** the airbag body (41) is arranged in the seat portion (10) without being folded and without being filled with the inflating fluid.

## Patentansprüche

1. Fahrzeuginsassen-Schutzvorrichtung mit in einem Sitzbereich (10) eines Fahrzeugsitzes angeordneten Airbagmodul (AN), wobei der Sitzbereich (10) eine Sitzfläche (10a) aufweist, das Airbagmodul (AN) einen Befüllungsfluidgenerator (61) und einen Airbag (40) beinhaltet und der Airbag (40) durch ein von dem Befiillungsfluidgenerator (61) ausgestoßenes Hochdruckfluid aufgeblasen wird, wodurch die Sitzfläche (10a) angehoben wird, um eine Vorwärtsbewegung des Lumbalbereichs eines auf dem Sitzbereich (10) sitzenden und durch einen Sitzgurt (30) zurückgehaltenen Insassen zu verhindern,
der Airbag (40) umfasst einen Airbagkörper (41), der eine Außenkontur des Airbags (40) formt, wobei der Airbagkörper (41) umfasst:
- einen hinteren Befüllungsabschnitt (48, 92), der unterhalb des oberen Bereichs der Oberschenkel des Insassen aufgeblasen wird,
- einen vorderen Befüllungsabschnitt (47, 91), der unterhalb des untern Bereichs der Oberschenkel des Insassen aufgeblasen wird, wobei, wenn der Airbag (40) aufgeblasen wird, der vordere Befüllungsabschnitt (47, 51) in eine höhere Position aufgeblasen wird als der hintere Befüllungsabschnitt (48, 92),
**dadurch gekennzeichnet dass**
- ein Innensack (71) in dem vorderen Befüllungsabschnitt angeordnet ist, wobei der Innensack (71), der den Befüllungsfluidgenerator (61) aufnimmt, wenigstens ein Auslassloch (79) aufweist, das das Befüllungsfluid von dem Befüllungsfluidgenerator (61) im Wesentlichen aufwärts auslässt,
oder
- ein Halteseil sich in dem Airbagkörper (41) befindet und an einer dem hinteren Befüllungsabschnitt (48) entsprechenden Stelle angeordnet ist, wobei das Halteseil (93) das Aufblasen des Airbagkörpers (41) in Höhenrichtung derart begrenzt, dass, wenn der Airbagkörper (41) aufgeblasen wird, der hintere Befüllungsabschnitt (48) in eine niedrigere Position aufgeblasen wird als der vordere Befüllungsabschnitt (47).

2. Fahrzeuginsassen-Schutzvorrichtung nach Anspruch 1, **dadurch gekennzeichnet, dass** das Auslassloch (79) ein Loch eines Auslasslochpaars ist, von denen jedes Auslassloch in Breitenrichtung gesehen in der Nähe einer Seite des Innensacks (71) geformt ist, wobei jedes der Auslasslöcher (79) eine aufwärtsgerichtete Öffnung aufweist, die es zulässt, dass der Innensack (71) und der Airbagkörper (41) miteinander kommunizieren.

3. Fahrzeuginsassen-Schutzvorrichtung nach Anspruch 1, **dadurch gekennzeichnet, dass** der Airbagkörper (41) aus einem einzigen Sackteil (41) geformt ist, wobei der einzelne Sackteil (41) einen vorderen Abschnitt (47, 91), der als der vordere Befüllungsabschnitt dient, und einen hinteren Abschnitt (48, 92), der als der hintere Befüllungsabschnitt dient, enthält.

4. Fahrzeuginsassen-Schutzvorrichtung nach Anspruch 1, **dadurch gekennzeichnet, dass** der Airbagkörper (41) einen vorderen Sackteil (91), der als der vordere Befüllungsabschnitt dient, und einen hinteren Sackteil (92), der als der hintere Befüllungsabschnitt dient, enthält, wobei der hintere Sackteil (92) mit der Rückseite des vorderen Sackteils (91) verbunden ist und mit dem vorderen Sackteil (91) kommuniziert.

5. Fahrzeuginsassen-Schutzvorrichtung nach einem der Ansprüche 1 bis 4, **dadurch gekennzeichnet, dass** der Befüllungsfluidgenerator (91) in dem vorderen Befüllungsabschnitt (47, 91) des Airbagkörpers (41) platziert ist.

6. Fahrzeuginsassen-Schutzvorrichtung nach einem der Ansprüche 1 bis 5, **dadurch gekennzeichnet, dass** Airbagkörper (41) ungefaltet und nicht mit dem Befüllungsfluid befüllt in dem Sitzbereich (10) angeordnet ist.

## Revendications

1. Appareil de protection d'un occupant ayant un module de coussin d'air (AM) aménagé dans une partie de siège (10) d'un siège de véhicule, dans lequel la partie de siège (10) a une surface de siège (10A), le module de coussin d'air (AM) comprend un générateur de fluide de gonflage (61) et un coussin d'air (40), et le coussin d'air (40) est gonflé par un fluide sous pression élevée éjecté du générateur de fluide de gonflage (61), augmentant de la sorte la surface de siège (10A) pour empêcher un mouvement vers l'avant de la région lombaire d'un occupant qui est assis sur la partie de siège (10) et retenu par une courroie de siège (30),
le coussin d'air (40) comprend un corps de coussin d'air (41) qui constitue une forme externe du coussin d'air (40), le corps de coussin d'air (41) comprenant :
- une partie de gonflage arrière (48, 92) qui est gonflée en dessous des cuisses supérieures de l'occupant ; et
- une partie de gonflage avant (47, 91) qui est gonflée en dessous des cuisses inférieures de l'occupant, dans lequel, lorsque le coussin d'air (40) est gonflé, la partie de gonflage avant (47, 91) est gonflée jusque dans une position supérieure à la partie de gonflage arrière (48, 92) ;
**caractérisé en ce que**
- un coussin interne (71) est aménagé dans la partie de gonflage avant, le coussin intérieur (71) hébergeant le générateur de fluide de gonflage (61) ayant au moins un trou de décharge (79) qui décharge le fluide de gonflage du générateur de fluide de gonflage (61) sensiblement vers le haut, ou
- une attache (93) est située dans le corps de coussin d'air (41) et aménagée dans une position correspondant à la partie de gonflage arrière (48), dans lequel l'attache (93) restreint le gonflage du corps de coussin d'air (41) par rapport au sens de la hauteur, de sorte que la partie de gonflage arrière (48) soit gonflée jusque dans une position inférieure à la partie de gonflage avant (47) lorsque le corps de coussin d'air (41) est gonflé.

2. Appareil de protection d'un occupant selon la revendication 1, **caractérisé en ce que** le trou de décharge (79) est l'un d'une paire de trous de décharge formés chacun au voisinage d'un côté du coussin interne (71) dans le sens de la largeur, chacun des trous de décharge (79) a une ouverture vers le haut qui permet au coussin interne (71) et au corps de coussin d'air (41) de communiquer l'un avec l'autre.

3. Appareil de protection d'un occupant selon la revendication 1, **caractérisé en ce que** le corps de coussin d'air (41) est formé d'un seul élément de coussin (41), dans lequel le seul élément de coussin (41) comprend une section avant (47, 91) servant de partie de gonflage avant et une section arrière (48, 92) servant de partie de gonflage arrière.

4. Appareil de protection d'un occupant selon la revendication 1 ou 2, **caractérisé en ce que** le corps de coussin d'air (41) comprend un élément de coussin avant (91) servant de partie de gonflage avant et une élément de coussin arrière (92) servant de partie de gonflage arrière, dans lequel l'élément de coussin arrière (92) est raccordé au côté arrière de l'élément de coussin avant (91) et communique avec l'élément de coussin avant (91).

5. Appareil de protection d'un occupant selon l'une quelconque des revendications 1 à 4, **caractérisé en ce que** le générateur de fluide de gonflage (61) est situé dans la partie de gonflage avant (47, 91) du corps de coussin d'air (41).

6. Appareil de protection d'un occupant selon l'une quelconque des revendications 1 à 5, **caractérisé en ce que** le corps de coussin d'air (41) est aménagé dans la partie de siège (10) sans être pliée ni être remplie du fluide de gonflage.
